# EUROPÄISCHE PATENTSCHRIFT

(11) **EP 2 142 913 B1**
(45) Veröffentlichungstag und Bekanntmachung des Hinweises auf die Patenterteilung: **04.07.2018**
(21) Anmeldenummer: 08735098.9
(22) Anmeldetag: 09.04.2008
(51) Int. Cl.: G01N 21/84

(54) **ANALYSESYSTEM MIT EINEM ANALYSEGERÄT UND EINEM TESTTRÄGER ZUR PHOTOMETRISCHEN BESTIMMUNG EINES ANALYTEN IN EINER KÖRPERFLÜGSSIGKEIT**
ANALYTIC SYSTEM FOR PHOTOMETRIC DETERMINATION OF AN ANALYTE IN A BODY FLUID USING AN ANALYTIC DEVICE AND A TEST CARRIER TO BE FITTED TO THE ANALYTIC DEVICE
SYSTÈME D'ANALYSE DESTINÉ À LA DÉTERMINATION PHOTOMÉTRIQUE D'UN ANALYTE DANS UN LIQUIDE CORPOREL DOTÉ D'UN APPAREIL D'ANALYSE ET D'UN SUPPORT DE TEST DESTINÉ À L'ENREGISTREMENT DANS L'APPAREIL D'ANALYSE

(30) Priorität: 27.04.2007 EP 07008615
(43) Veröffentlichungstag der Anmeldung: 13.01.2010
(73) Patentinhaber: Roche Diabetes Care GmbH, 68305 Mannheim (DE); F. Hoffmann-La Roche AG, 4070 Basel (CH)
(72) Erfinder: PORSCH, Ulrich, 69469 Weinheim (DE); LORENZ, Robert, 67547 Worms (DE)
(74) Vertreter: Durm Patentanwälte PartG mbB
(86) Internationale Anmeldenummer: PCT/EP2008/002782
(87) Internationale Veröffentlichungsnummer: WO 2008/135128

(56) Entgegenhaltungen:
- EP-A- 0 387 630
- EP-A1- 0 974 303
- DE-A1- 10 156 809
- US-A- 5 780 304
- US-A1- 2003 028 329

## Beschreibung

Die vorliegende Erfindung betrifft ein Analysesystem zur photometrischen Bestimmung der Konzentration eines Analyten in einer Körperflüssigkeit mit einem Analysegerät und einem Testträger. Der Testträger weist eine Aufnahmezone auf, in der als Folge einer Reaktion einer mit dem Testträger kontaktierten Probe der Körperflüssigkeit mit einem in dem Testträger enthaltenen Reagenz eine photometrisch nachweisbare Änderung stattfindet.

Analysesysteme zur photometrischen Bestimmung eines Analyten in einer Körperflüssigkeit, die disposible Testelemente, Testträger oder Teststreifen verwenden, sind bekannt. Sie werden eingesetzt, um die Konzentration verschiedener Analyten, wie beispielsweise Glucose oder Cholesterin im Blut zu ermitteln. Die Testträger haben meist die Form von Teststreifen, jedoch sind auch andere Formen von Testelementen, beispielsweise flache, näherungsweise quadratische Plättchen, gebräuchlich.

In der Regel enthalten die Testträger Reagenzien, deren Reaktion mit der Probe zu einer detektierbaren Veränderung führt, die mit einer zum System gehörenden Mess- und Auswerteeinrichtung gemessen wird.

Gebräuchlich sind insbesondere photometrische Analysesysteme, bei denen die Reaktion eine Farbänderung in einer Nachweisschicht des Testelementes verursacht, die photometrisch gemessen wird. Hierbei wird in der Regel die Intensität des von dem Testträger reflektierten Lichtes untersucht.

Bei sachgemäßer Anwendung arbeiten die photometrischen Analysesysteme in der Regel zuverlässig. Wird die erforderliche Sorgfalt bei der Verwendung der Geräte oder der Testträger bzw. Teststreifen vom Benutzer jedoch nicht aufgebracht, können fehlerhafte Messwerte resultieren.

Trotzdem kann es auch bei sachgemäßer Anwendung zu fehlerhaften Messergebnissen kommen, insbesondere wenn Fabrikationsfehler beim Analysegerät oder beim Testträger vorliegen. Obwohl große Sorgfalt bei der Herstellung solcher Analysegeräte und Teststreifen verwendet wird, besteht das Bedürfnis, Fehlfunktionen des Messgerätes zu ermitteln, um fehlerhafte Analysewerte zu vermeiden. Da beispielsweise bei der Ermittlung der Konzentration des Glucosegehaltes das Messergebnis zur Therapie eines Patienten verwendet wird, insbesondere die Dosierung des Insulins bestimmt, ist ein fehlerfreier Analysewert besonders wichtig. Eine auf einem fehlerhaften Messergebnis basierende falsche Zugabe von Insulin (zu geringe oder zu hohe Insulinzugabe) kann zu körper- und lebensbedrohlichen Situationen führen.

Analysesysteme zur optischen Blutzuckermessung sind im Stand der Technik bekannt und werden beispielsweise in folgenden Druckschriften behandelt:
EP 0 387 630 A2
DE 101 56 809 A1
US 5,780,304 A
EP 0 974303 A1

Typischerweise wird bei den photometrischen Analysesystem kontrolliert, ob die Messeinheit fehlerfrei arbeitet. Zum Einen wird anhand von Referenzwerten überprüft, ob der verwendete Testträger ausreichend benetzt ist. Zum anderen wird der zeitliche Verlauf des Messwertes überprüft. Beispielsweise wird dazu geprüft, ob zwei zeitlich aufeinanderfolgende Messwerte monoton steigen bzw. monoton fallend sind. Auch ist bekannt, bei der zeitlichen Aufnahme mehrerer Messwerte zu prüfen, ob ihre Änderung unter einem bestimmten Grenzwert bleibt.

Fehlerhafte Messergebnisse lassen sich gelegentlich auf einen Fehler im Microcontroller des Analysegerätes zurückführen. Deshalb sind viele Geräte redundant ausgebildet und umfassen zwei parallel arbeitende Mikrocontroller. Der Einsatz eines zweiten Mikrocontrollers (Hardware) vergrößert nicht nur den Platzbedarf im Analysegerät, er macht dieses auch teurer. Darüber hinaus müssen Prozeduren für die parallele Verarbeitung der Messsignale geschaffen werden.

Die EP 0 387 630 A2 befasst sich mit dem Problem, dass aus den optisch ermittelten Messwerten (Reflexionswerte) auf den gewünschten Konzentrationswert rückgeschlossen werden muss. Die Plausibilitätsprüfung der Konzentrationswerte erfolgt aber lediglich anhand von im vorhinein festgelegten Grenzwerten.

Wird die Mess- und Auswerteeinrichtung in Form von Software implementiert, so kann die Redundanz durch ein zweites Software-Modul geschaffen werden. Der Verarbeitungsaufwand ist jedoch größer, da zwei parallel ablaufende Programme abgearbeitet werden müssen. Zudem ist die Programmierung aufwendig. Die Ermittlung des Analyseergebnisses dauert durch die Parallelverarbeitung länger.

Das Dokument DE 101 56 809 A1 betrifft ein Verfahren und eine Vorrichtung zur optischen Blutzuckermessung, wobei der ermittelte Messwert mit einem Referenzwert verglichen wird, der bei einem unbenetzten Messfeld eines Testträgers ermittelt wurde. Dadurch ist es möglich, eine fehlerhafte, insbesondere unzureichende Benetzung des Messfeldes und sich daraus ergebende Messfehler aufzudecken.

Das Dokument US 5,780,304 A betrifft ebenfalls eine optische Ermittlung eines Analysewertes auf einem Teststreifen und eine Zuordnung des Messsignals zu einem Glucosekonzentrationswert, die in Form einer Funktionskurve an das Gerät übertragen wird. Hierbei wird ein Code übermittelt, anhand dessen ein in dem Gerät hinterlegter Satz an Berechnungsvariablen verwendet wird, die als Tabelle hinterlegt sind. Diese Zuordnung ist jedoch sehr ungenau, da auf in dem Gerät abgespeicherte Werte zurückgegriffen werden muss, die nur eine Annäherung darstellen können.

Das Dokument EP 0 974303 A1 beschreibt ein photometrisch arbeitendes Analysesystem zur Bestimmung des Blutzuckergehaltes in einer Probe, bei dem der Einfluss des Messzeitpunkts und die Abhängigkeit der Glucosekonzentration vom Messzeitpunkt berücksichtigt werden. Deshalb wird zu unterschiedlichen Zeitpunkten ein Messwert bestimmt und die Änderung des Messwertes (Absorptionswert) überprüft. Liegt die zwischen den Messwerten an zwei hintereinander folgenden Zeitpunkten auftretende Abweichung unterhalb eines Grenzwertes, so wird aus dem ermittelten Messwert der Glucosewert bestimmt.

In der US 2003/0028329 A1 werden ein Verfahren und ein Gerät zum Messen der Eigenschaften einer Probe durch Spektralanalyse offenbart. Verfahrensgemäß werden die Eigenschaften ausgehend von Spektraldaten unter Benutzung eines Kalibrierungsmodels ermittelt, das auf Basis von Referenzproben erstellt wurde. Um die Stabilität des Messprozesses zu verbessern, wird eine weitere Berechnung der Eigenschaften der Proben durchgeführt, bei der zumindest ein weiteres Kalibrierungsmodel, das auf Basis von weiteren Referenzproben erstellt wurde, verwendet wird.

Es ist Aufgabe der Erfindung, ein Analysesystem zur photometrischen Bestimmung eines Analyten in einer Körperflüssigkeit bereitzustellen, das eine einfache Überprüfung der Mess- und Auswerteeinrichtung ermöglicht.

Die Aufgabe wird erfindungsgemäß durch ein Verfahren mit den Merkmalen des Anspruchs 9 und durch ein Analysesystem mit den Merkmalen des Anspruchs 1 gelöst. Die Unteransprüche definieren bevorzugte Ausführungsformen des erfindungsgemäßen Analysesystems.

Das erfindungsgemäße Analysesystem zur photometrischen Bestimmung eines Analyten in einer Körperflüssigkeit umfasst ein Analysegerät und einen Testträger. Der Testträger weist eine Auswertezone auf, in der als Folge einer Reaktion einer mit dem Testträger kontaktierten Probe der Körperflüssigkeit, mit einem Reagenz, das in dem Testträger enthalten ist, eine photometrisch nachweisbare Änderung stattfindet.

Das Analysegerät schließt einen optischen Sender zur Emission von Licht auf die Auswertezone des Testträgers, einen optischen Empfänger ein, um Licht zu detektieren, das von der Auswertezone empfangen wird, und um ein dem empfangenen Licht entsprechendes Messsignal zu erzeugen. Das Licht von der Auswertezone kann entweder an der Auswertezone (diffus) reflektiert werden oder durch die Auswertezone transmittieren, bevor es den optischen Empfänger erreicht. Das von dem Empfänger erzeugte Messsignal entspricht der Intensität des empfangenen Lichts. Das Analysegerät umfasst eine Mess- und Auswerteeinrichtung mit einer Messeinheit und einer Auswerteeinheit.

In der Messeinheit wird das in dem optischen Empfänger empfangene Messsignal verstärkt und digitalisiert. Aus dem digitalisierten Messsignal wird in der Auswerteeinheit der gesuchte Konzentrationswert mittels eines Auswertealgorithmus ermittelt, der eine Zuordnung zwischen Werten des Messsignals und Konzentrationswerten umfasst. Die Zuordnung zwischen den Werten des Messsignals und den Konzentrationswerten kann als Formel, Funktion oder als Tabelle hinterlegt sein.

Im Rahmen der Erfindung wurde festgestellt, dass die Analysegeräte teilweise fehlerhafte Messergebnisse ausgeben, die jedoch nicht auf einen systematischen Fehler schließen lassen. Der auftretende Fehler tritt sporadisch auf und ist beispielsweise von Umwelteinflüssen abhängig, d.h. abhängig von der Umgebungstemperatur oder den Umgebungsbedingungen, wie Feuchte oder Luftdruck. Auch wurde festgestellt, dass die in Form eines Mikrocomputers ausgebildete Mess- und Auswerteeinrichtung der Analysegeräte in Abhängigkeit der zu verarbeitenden Werte, also der am Eingang anliegenden Messsignale, fehlerhafte Ergebnisse liefern kann. Scheinbar ergibt sich ein zeitliches Auftreten eines Fehlers.

Ein derartiger Fehler lässt sich auf einfache Weise detektieren, wenn ein Kontrollwert, der im Verarbeitungsablauf hinter der Ausführung eines Rechenschrittes zur Ermittlung des Messergebnisses erfasst wird, mittels eines Erwartungswertes verglichen wird. Der Verarbeitungsablauf umfasst wenigstens einen Rechenschritt eines Prozessors oder Mikrocomputers. Er kann darüber hinaus auch weitere Verfahrens- und/oder Rechenschritte einschließen, um aus den Werten des Messsignals das gesuchte Messergebnis zu ermitteln, beispielsweise einen Konzentrationswert oder einen eine Konzentration repräsentierenden Wert. Das Messergebnis könnte auch ein "Zwischenwert" sein, der im Prozessor zur Weiterverarbeitung verwendet wird.

Der Kontrollwert ist erfindungsgemäß der Konzentrationswert. Er wird mittels eines Kontrollalgorithmus überprüft, in dem eine Abweichung des ermittelten Kontrollwertes von einem Erwartungswert bestimmt wird. Der Erwartungswert ist ein Referenzkonzentrationswert. Übersteigt diese Abweichung einen vordefinierten Grenzwert, wird ein Fehler in der Mess- und Auswerteeinrichtung erkannt. An dieser Stelle wird zusätzliches Wissen über den Wert der Kontrollgröße in dem erfindungsgemäßen System implementiert. Es ist in etwa bekannt, welches Verhalten der Kontrollwert aufweist bzw. in welchen groben Bereichen der Kontrollwert liegen muss. Dies kann durch Messreihen im Labor oder mittels Referenzsystemen bestimmt werden, die redundant aufgebaute Mess- und Auswerteeinrichtungen aufweisen.

Im Rahmen der Erfindung wird der Kontrollwert als ein Wert während der Verarbeitung des Messsignals zur Ermittlung des Messergebnisses bzw. des gesuchten Konzentrationswerts verstanden. Erfindungsgemäß ist der Kontrollwert der gesuchte Konzentrationswert selbst, so dass die Überprüfung der Mess- und Auswerteeinrichtung am Ende der Bestimmung des Konzentrationswertes stattfindet. Der Kontrollwert kann aber auch aus anderen "Zwischenwerten" während der Verarbeitung des Messwertes gebildet werden, beispielsweise aus prozessorinternen Rechengrößen, die die Konzentration repräsentieren, oder aus verarbeiteten Remissionswerten (Intensität des von dem Testträger reflektierten Lichts).

Die Kontrollgröße wird an einem Erfassungspunkt erfasst. Dieser Erfassungspunkt ist eine Stelle im Verarbeitungsablauf innerhalb des Prozessors, wenn bereits wenigstens ein Rechenschritt zur Ermittlung des Konzentrationswertes ausgeführt worden ist. Der Erfassungspunkt liegt also in Bezug auf den Verarbeitungsablauf hinter mindestens einem Rechenschritt (downstream). Er kann z.B. ein Ort in der Mess- und Auswerteeinrichtung bzw. in dem Mikrocomputer sein oder auch eine Ablaufstelle in einem Computerprogramm, wenn die Mess- und Auswerteeinrichtung in Form von Software in einem Mikrocomputer, z.B. in einem ASIC, implementiert ist.

Im Folgenden wird ohne Einschränkung der Allgemeinheit der Kontrollwert als Konzentrationswert beschrieben. Selbstverständlich kann anstelle des Konzentrationswertes auch jeder andere geeignete Wert als Kontrollwert verwendet werden. Ebenfalls ohne Einschränkung der Allgemeinheit wird ein Referenzkonzentrationswert als Erwartungswert verwendet. Der Erwartungswert und der Kontrollwert sind in der Regel derart aufeinander abgestimmt, dass der Kontrollwert und der Erwartungswert die gleiche Größe betreffen. Mit anderen Worten: Ist beispielsweise der Kontrollwert ein Wert der Konzentration, dann ist auch der Erwartungswert ein Wert der Konzentration.

Der Konzentrationswert wird erfindungsgemäß mittels eines Kontrollalgorithmus überprüft, in dem eine Abweichung des ermittelten Konzentrationswertes von einem Referenzkonzentrationswert bestimmt wird, welcher in Abhängigkeit des zu messenden Analyten, des Testträgers oder des Bestimmungsverfahrens zur Ermittlung des Konzentrationswertes parametrisiert sein kann. Hierbei kann allgemeines Wissen über den Konzentrationswert implementiert sein. Wenn die Abweichung des Konzentrationswertes von dem Referenzkonzentrationswert einen vordefinierten Grenzwert übersteigt, wird ein Fehler in der Mess- und Auswerteeinrichtung erkannt.

In der Regel ist der Auswertealgorithmus zur Ermittlung des gesuchten Konzentrationswertes aus dem digitalisierten Messsignal wenigstens von dem verwendeten Testträger abhängig. Hierbei ergeben sich Abweichungen von unterschiedlichen Testträgern, die mit verschiedenen Produktionsverfahren hergestellt worden sind.

Der Begriff "verschiedene Produktionsverfahren" wird hier so verstanden, dass unterschiedliche Testträger auf unterschiedliche Maschinen oder Anlagen hergestellt oder bei Verwendung gleicher Maschinen und Anlagen mit unterschiedlichen Verfahren bzw. unter Verwendung unterschiedlicher Materialien oder Verfahrensdauern einzelner Verfahrensschritte hergestellt worden sind. Beispielsweise können Testträger, die mit dem gleichen Verfahrensablauf auf der gleichen Maschine zu unterschiedlichen Zeiten und in unterschiedlichen Produktionschargen hergestellt worden sind, durchaus die gleichen Informationen und Parameter aufweisen, die in dem Auswertealgorithmus zur Ermittlung des gesuchten Konzentrationswertes verwendet werden.

Durch die Verwendung eines Referenzwertes und eines einfach und genauen zu parametrisierenden Grenzwertes kann der mit der Mess- und Auswerteeinrichtung ermittelte Konzentrationswert schnell und zuverlässig überprüft werden.

Zur Überprüfung des Konzentrationswertes ist keine zweite exakte Ermittlung des Konzentrationswertes, beispielsweise mit einem redundanten System, notwendig. Vielmehr reicht eine Überprüfung des Konzentrationswertes im Sinne einer Überprüfung auf Plausibilität (nicht auf exakte Gleichheit) aus. Hierbei wird der ermittelte Konzentrationswert mit einem Referenzkonzentrationswert verglichen. Dazu wird eine Referenzzuordnung eingesetzt, die in dem Kontrollalgorithmus verwendet wird. Einer Mehrzahl von Referenzmesswerten wird mittels der Referenzzuordnung eine Mehrzahl von Referenzkonzentrationswerten zugeordnet. Zur Überprüfung eines aus dem aktuellen Messwert des Messsignals ermittelten Konzentrationswertes wird zunächst der Referenzwert ausgewählt, der dem aktuellen Messwert des Messsignals benachbart ist. Aus diesem Referenzwert wird mittels der Referenzzuordnung der entsprechende Referenzkonzentrationswert bestimmt. Der ausgewählte Referenzkonzentrationswert wird mit dem ermittelten Konzentrationswert verglichen, wobei die Abweichung einen vorbestimmten Grenzwert nicht übersteigen darf. Der vordefinierte Grenzwert kann auf einfache Weise parametrisiert werden.

Der Auswertealgorithmus zur Ermittlung des gesuchten Konzentrationswertes aus dem digitalisierten Messsignal ist wie oben erläutert, abhängig von dem verwendeten Testträger und somit produktionsverfahrensspezifisch. "Produktionsverfahrensspezifisch" im Sinne der Erfindung sind Werte, die abhängig von dem Produktionsverfahren sind, was beispielsweise die Maschinen und Anlagen oder das Verfahren zur Herstellung umfasst. Eine Änderung des Verfahrens auf einer bestimmten Maschine, beispielsweise durch Änderung von verwendeten Materialien, der Reihenfolge von Verfahrensschritten oder auch der zeitlichen Dauer einzelner Verfahrensschritte führt dann zu einer Änderung der produktionsverfahrensspezifischen Werte. Ebenso ändern sich die spezifischen Werte, wenn eine andere Maschine oder Anlage verwendet oder wenn eine bestehende Maschine verändert wird, das Verfahren aber gleich bleibt. Als Auswertealgorithmus wird dabei die Gesamtheit aus hinterlegter Funktion bzw. Relation und der in einer solchen Funktion definierten Variablen verstanden, die veränderliche Parameter sein können. Insbesondere können die Variablen der Zuordnung zwischen den Werten des Messsignals und den Konzentrationswerten, die in dem Auswertealgorithmus umfasst sind, abhängig von den verwendeten Testträgern Die Zuordnung und der Auswertealgorithmus sind also produktionsverfahrensspezifisch.

Bevorzugt ist der Auswertealgorithmus zur Ermittlung des gesuchten Konzentrationswertes aus dem digitalisierten Messwert produktionschargenspezifisch oder chargenspezifisch. Dabei unterscheiden sich die Testträger, die in unterschiedlichen Produktionschargen in der gleichen Produktionsanlage hergestellt worden sind, was in dem Auswertealgorithmus berücksichtigt werden soll.

Die zur Bestimmung des Konzentrationswertes verwendete Zuordnung zwischen den Messwerten des Messsignals und den Konzentrationswerten ist bevorzugt chargenspezifisch für die Produktionscharge der verwendeten Testträger. Vor der ersten Verwendung eines Testträgers einer neuen Produktionscharge werden deshalb Informationen über die chargenspezifische Zuordnung in das Analysegerät eingespielt und in einem Speicher des Analysegerätes abgespeichert.

Ebenso wie die Zuordnung des Auswertealgorithmus produktionsverfahrensspezifisch ist, ist auch die Referenzzuordnung, die in dem Kontrollalgorithmus verwendet wird und einer Mehrzahl von Referenzmesswerten einer Mehrzahl von Referenzkonzentrationswerten zuordnet, abhängig von den für die Analyse verwendeten Testträger. In der Regel ist die Referenzzuordnung produktionsverfahrensspezifisch. Bevorzugt kann sie auch produktionschargenspezifisch sein.

Bevorzugt ist auch die Referenzzuordnung produktionschargenspezifisch, so dass die Referenzzuordnung ebenfalls vor der ersten Verwendung eines Testträgers einer neuen Produktionscharge in dem Analysegerät abgespeichert werden muss. Die Referenzzuordnung kann entweder in das Analysegerät eingespielt werden, d.h. mittels eines Datenträgers oder über eine Schnittstelle von extern übertragen werden. Die Referenzzuordnung wird dann in einem anderen Gerät erzeugt und in einem Speicher des Analysegerätes abgespeichert.

Die Überprüfung des Konzentrationswertes mittels eines Kontrollalgorithmus, der eine Referenzzuordnung zwischen einer Mehrzahl von produktionsverfahrensspezifischen Referenzmesswerten zu einer Mehrzahl von Referenzkonzentrationswerten zuordnet, hat den Vorteil, dass eine exakte und für die einzelnen verwendeten Testträger angepasste und spezifische Kontrolle stattfindet. Auf diese Weise werden die mittels des Auswertealgorithmus des Prozessors ermittelten Konzentrationswerte, kontrolliert. Dadurch findet eine Überprüfung des verwendeten Prozessors bzw. Mikrocontrollers statt, so dass auch sporadisch auftretende, nicht systematische Fehler des Mikroprozessors erkannt und erfasst werden können. Die Zuverlässigkeit des verwendeten Analysesystems steigt stark an. Gleichzeitig erweist sich dieses Vorgehen als besonders einfach und effizient, da keine zweite Messung stattfinden und keine redundante Erfassung und Auswertung eines optischen Signals erfolgen muss. Das erfindungsgemäße Analysesystem ist deshalb besonders zuverlässig und robust. Es zeichnet sich durch eine schnelle Verarbeitung und geringe Kosten aus.

Alternativ kann besonders bevorzugt die Referenzzuordnung in dem Analysegerät selbst erzeugt werden. Sie wird mittels des Auswertealgorithmus mit vorbestimmten Referenzmesswerten erzeugt, wobei jedem Referenzmesswert ein Referenzkonzentrationswert durch Anwendung der in dem Auswertealgorithmus hinterlegten Zuordnung zugeordnet wird. Die erzeugte Referenzzuordnung wird dann in dem Analysegerät abgespeichert. Beispielsweise kann die Referenzzuordnung in Form einer "Look-Up-Tabelle" oder in einer anderen Tabellenform als Wertepaaren abgelegt werden. Bevorzugt werden in der Referenzzuordnung wenigstens zehn, besonders bevorzugt wenigstens dreißig Wertepaare abgelegt. Im Rahmen der Erfindung haben sich ca. fünfzig Wertepaare als besonders geeignet erwiesen. Je mehr Wertepaare hinterlegt werden, desto genauer kann die Überprüfung des ermittelten Konzentrationswertes sein.

Die Abspeicherung der Referenzzuordnung muss vor der ersten Verwendung eines Testträgers, insbesondere vor der Verwendung eines Testträgers eines bestimmten Produktionsverfahrens geschehen, da auch die Referenzzuordnung produktionsverfahrensabhängig ist. Bei einer Produktionschargenabhängigkeit der Referenzzuordnung von den Testträgern ist die Abspeicherung und/oder Erzeugung der Referenzzuordnung vor der ersten Verwendung eines Testträgers einer neuen Produktionscharge durchzuführen, da auch die Referenzzuordnung produktionschargenabhängig sein kann und für Testträger aus unterschiedlichen Produktionschargen ebenso abweichen kann wie die Zuordnung des Auswertealgorithmus (Seite 8).

Wird die Referenzzuordnung des Kontrollalgorithmus in dem Analysegerät durch Anwendung der Zuordnung des Auswertealgorithmus erstellt, so kann die Referenzzuordnung zusätzlich überprüft werden. Bevorzugt werden die ermittelten Referenzkonzentrationswerte auf mathematische Monotonie überprüft, d.h. darauf überprüft, ob die Referenzkonzentrationswerte eine Funktion bzw. eine Folge mit einer gleichsinnigen Steigung beschreiben. Dazu wird erfindungsgemäß das Wissen über die Konzentrationswerte in Abhängigkeit des emittierten Lichts, also des Messsignals, verwendet. Für steigende Messwerte des Messsignals, also für eine ansteigende Intensität des emittierten Lichtsignals, ist bekannt, dass die Konzentration monoton fällt. Deshalb müssen auch die Referenzkonzentrationswerte mit steigenden Referenzmesswerten fallen. Selbstverständlich ist auch eine Überprüfung von monoton steigenden Konzentrationen möglich. Photometrische Verfahren, die auf Lumineszenz beruhen, weisen bei steigenden Messwerten ebenfalls steigende Konzentrationswerte auf. Hier müssen auch die Referenzkonzentrationswerte mit steigenden Referenzmesswerten steigen.

Die durch Anwendung der Zuordnung des Auswertealgorithmus erzeugte Referenzzuordnung kann optional auf "Glattheit" überprüft werden. Die Abweichungen zwischen zwei aufeinander folgenden Referenzkonzentrationswerten dürfen nicht zu groß sein, insbesondere eine vorgegebene parametrisierbare Toleranz nicht überschreiten, die in einem Speicher des Analysegerätes hinterlegt sein können.

Andernfalls wird ein Fehler der Mess- und Auswerteeinrichtung erkannt. Es kann nun entweder ein Fehler ausgegeben werden oder die Ermittlung der Referenzzuordnung wiederholt werden. Bei der Wiederholung der Ermittlung der Referenzzuordnung können abweichende Referenzmesswerte verwendet werden.

Die Mess- und Auswerteeinrichtung kann auch dadurch überprüft werden, dass in der Messeinheit zu einer Mehrzahl von Messzeitpunkten eine Mehrzahl von aufeinanderfolgenden Hilfsmesswerten des Messsignals erfasst werden. Die aufeinanderfolgenden Hilfsmesswerte werden in der Mess- und Auswerteeinrichtung mit den jeweils vorrausgehenden Hilfsmesswerten verglichen. Damit wird überprüft, ob die Hilfsmesswerte eine mathematisch monotone Funktion oder Folge bilden. Die Hilfsmesswerte müssen also alle eine gleichsinnige Steigung haben. Ist dies nicht der Fall wird ein Fehler der Mess- und Auswerteeinrichtung erkannt. Dem Fachmann ist klar, dass diese Überprüfung alternativ und/oder zusätzlich zur Überprüfung der Abweichung des Kontrollwertes von dem Erwartungswert durchgeführt werden kann.

Das erfindungsgemäße Verfahren zur Bestimmung eines Analyten in einer Körperflüssigkeit mittels eines Analysesystems mit einem Analysegerät und einem Testträger, dass die gestellte Aufgabe ebenfalls löst, umfasst mehrere Schritte. Der optische Sender des Analysegerätes emitiert Licht auf die Auswertezone des Testträgers, in der eine photometrisch nachweisbare Änderung stattfindet. Aus dem Licht der Auswertzone wird ein entsprechendes Messsignal erzeugt, das in der Messeinheit verstärkt und digitalisiert wird.

Anschließend wird aus dem digitalisierten Messsignal in der Auswerteeinheit mittels eines Auswertealgorithmus der gesuchte Konzentrationswert ermittelt. Der Auswertealgorithmus umfasst eine produktionsverfahrensspezifische Zuordnung zwischen Werten des digitalisierten Messsignals und Konzentrationswerten, wobei wenigstens ein Rechenschritt mittels eines Prozessors in dem Auswertealgorithmus ausgeführt wird. Im Verfahrensablauf hinter der Ausführung des Rechenschritts wird an einem Erfassungspunkt in der Auswerteeinheit der Konzentrationswert erfasst und mittels eines Kontrollalgorithmus überprüft. Mittels einer Referenzzuordnung des Kontrollalgorithmus wird eine Mehrzahl von Referenzmesswerten einer Mehrzahl von Referenzkonzentrationswerten zugeordnet. Aus einem Referenzmesswert wird dann unter Verwendung der Referenzzuordnung der Referenzkonzentrationswert ermittelt und eine Abweichung zwischen dem ermittelten Konzentrationswert von dem zugeordneten Referenzkonzentrationswert bestimmt. Ein Fehler der Mess- und Auswerteeinrichtung wird erkannt, wenn die Abweichung des Konzentrationswertes von dem Referenzkonzentrationswert einen vordefinierten Grenzwert übersteigt.

Vorteilhaft an dem Verfahren ist, dass nicht nur die Messeinheit sondern auch die Auswerteeinheit überprüft werden. Dadurch lassen sich Fehler der Auswerteeinheit, insbesondere sporadisch auftretende Fehler, detektieren. Mit anderen Worten wird der Prozessor oder Mikroprozessor der Mess- und Auswerteeinrichtung überprüft. Diese Überprüfung findet dabei in Abhängigkeit von den verwendeten Testträgern statt, wobei produktionsverfahrensspezifische Informationen der Testträger in der verwendeten Zuordnung des Auswertealgorithmus und in der verwendeten Referenzzuordnung des Kontrollalgorithmus berücksichtigt werden. Damit ist das Ergebnis der Überprüfung sehr exakt und zuverlässig.

Bevorzugt werden die produktionsverfahrensspezifischen Informationen des Testträgers in einem Speicher des Analysegerätes abgespeichert. Die Informationen über die produktionsverfahrensspezifische Zuordnung wird in den Speicher eingespielt, bevor der Auswertealgorithmus für Testträger eines Prokuktionsverfahrens ausgeführt wird. Im Zusammenhang mit dem Einspielen der Informationen über dem Auswertealgorithmus und vor dessen erster Verwendung wird auch eine produktionsverfahrensspezifische Referenzzuordnung in dem Speicher abgelegt.

In einer weiterbevorzugten Ausführungsform des Verfahrens ist die produktionsverfahrensspezifische Zuordnung chargespezifisch, so dass bei der Verwendung von Testträgern einer anderen Produktionscharge die chargespezifischen Informationen berücksichtigt werden.

Die Erfindung wird nachfolgend anhand der Figuren näher erläutert. Die in der bevorzugten Ausführungsform dargestellten Besonderheiten können einzeln oder in Kombination verwendet werden, um bevorzugte Ausgestaltungen der Erfindung zu schaffen. Die beschriebene Ausführungsform stellt keine Einschränkung der Allgemeinheit des in den Ansprüchen definierten Gegenstandes dar. Es zeigen:
- Fig. 1: ein Prinzipschaltbild eines Analysesystems mit einem Analysegerät und einem Testträger;
- Fig. 2: den zeitlichen Verlauf des von dem optischen Empfänger des Analysegerätes empfangenen Lichts über die Zeit;
- Fig. 3: eine Zuordnung zwischen den Messwerten eines Messsignals und den Konzentrationswerten für einen Testträger;
- Fig. 4a,b: unterschiedliche Darstellungen einer Referenzzuordnung des Analysegeräts.

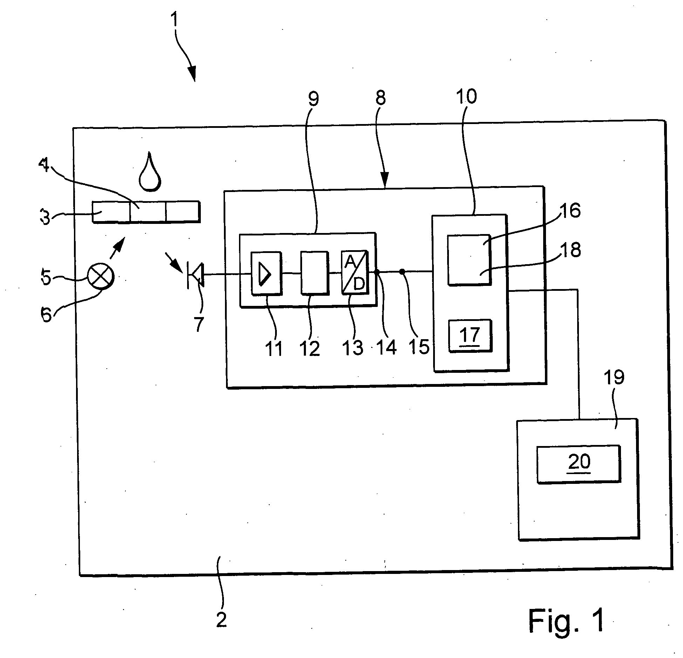

Figur 1 zeigt ein Analysesystem 1 mit einem Analysegerät 2 und einem Testträger 3, der als Teststreifen ausgebildet ist und eine Auswertezone 4 aufweist. In der Auswertezone 4 ist ein Reagenz enthalten, das bei Vorhandensein eines Analyten in einer Körperflüssigkeit, die auf die Auswertezone 4 aufgebracht wird, eine Reaktion hervorruft, deren Änderung photometrisch nachweisbar ist.

Die Auswertezone 4 des Testträgers 3 wird von einem optischen Sender 5 mit Licht bestrahlt. Der Sender 5 ist als Lichtquelle 6 ausgebildet, insbesondere als Licht emittierende Diode. Selbstverständlich können auch mehrere beliebige Lichtquellen vorhanden sein, die parallel oder seriell geschaltet sind. Das von dem Testträger 3 abgestrahlte Licht wird von einem optischen Empfänger 7 empfangen. Der Empfänger 7 ist ein Lichtsensor, insbesondere eine Fotodiode. Das von dem Testträger 3 reflektierte Licht wird als Remission bezeichnet. Dabei wird die Intensität des reflektierten Lichts gemessen und in ein entsprechendes Messsignal umgewandelt.

Das der Intensität des empfangenen Lichts entsprechende Messsignal wird an eine Mess- und Auswerteeinrichtung 8 weitergeleitet, die eine Messeinheit 9 und eine Auswerteeinheit 10 umfasst. Die Messeinheit 9 schließt einen Verstärker 11, eine Messschaltung 12, die als Bandfilter oder ähnliches ausgebildet ist, und einen A-/D-Wandler 13 ein. An einem Ausgang 14 der Messeinheit 9 steht dann ein digitalisiertes Messsignal 15 zur Verfügung, das als Remission bezeichnet wird.

Das digitalisierte Messsignal 15 wird von der Auswerteeinheit 10 verarbeitet. Die Auswerteeinheit 10 schließt einen Microcontroller 16 und einen Speicher 17 ein. In dem Microcontroller 16 ist eine Zuordnung 18 implementiert, mittels der aus dem Messsignal 15 ein Konzentrationswert ermittelt wird. Der Konzentrationswert wird auf seine Korrektheit überprüft, indem er mit einem Referenzkonzentrationswert verglichen und die Abweichung zu dem Referenzkonzentrationswert bestimmt wird. Überschreitet die Abweichung einen vorgegebenen Grenzwert, so wird ein Fehler erkannt.

Der erkannte Fehler wird an eine Anzeigeeinheit 19 übertragen und beispielsweise auf einem Display 20 angezeigt. Ist der ermittelte Konzentrationswert korrekt, d.h. ist die Abweichung kleiner als der Grenzwert, so wird auf dem Display 20 der ermittelte Konzentrationswert angezeigt.

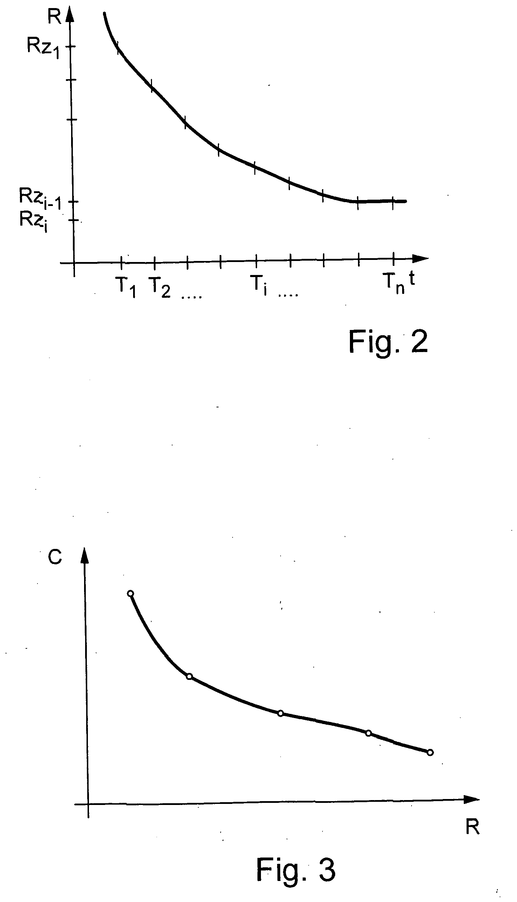

Figur 2 zeigt den zeitlichen Verlauf der von dem Empfänger 7 empfangenen Remission (Intensität des von dem Testträger 3 reflektierten Lichts). Selbstverständlich kann auch vom Testträger 3 transmittiertes Licht als Grundlage für die Konzentrationsermittlung verwendet werden. Die Remission ist das Messsignal, das von der Messeinheit 9 verarbeitet wird. Erfindungsgemäß kann das von der Messeinheit 9 digitalisierte Messsignal 15 überprüft werden. Dabei wird das bekannte Wissen über den zeitlichen Verlauf der Remission zugrundegelegt, der durch eine monoton fallende Kurve beschrieben werden kann. Zur Überprüfung des Messsignals werden zu einer Mehrzahl von Messzeitpunkten T₁, T₂, ... Tₙ eine Mehrzahl von Hilfsmesswerten des Messsignals ermittelt, die in dieser Ausführungsform als Zwischenmesswerte bzw. Zwischenremissionswerte, Rz₁, Rz₂ ... Rzₙ bezeichnet werden. Die Hilfsmesswerte müssen nicht zwingend Werte sein, die zeitlich vor dem Messwert liegen, der für die Ermittlung des Messergebnisses verwendet wird. Die aufeinanderfolgenden Zwischenmesswerte Rzᵢ werden mit dem jeweils vorausgehenden Messwert Rzᵢ₋₁ verglichen. Es wird überprüft, ob ein mathematisch monotoner Kurvenverlauf vorliegt. Mit dieser Methode wird bereits die "Güte" der Signalerfassung kontrolliert und ein auf einer fehlerhaften Messung beruhender Fehler der Mess- und Auswerteeinrichtung erkannt.

Zur Prüfung auf fallende Monotonie wird ermittelt, ob der Zwischenmesswert Rzᵢ einen geringeren Wert hat als der unmittelbar vorausgehende Zwischenmesswert Rzᵢ₋₁. Ist dies nicht der Fall, so liegt ein Fehler in der Messeinheit 9 vor. Ein Fehlersignal wird ausgegeben. Wird überprüft, ob die Zwischenmesswerte Rzᵢ eine monoton steigende Funktion bilden, müssen die Zwischenmesswert Rzᵢ größer sein als die unmittelbar vorausgehenden Zwischenmesswerte Rzᵢ₋₁. Alternativ könnte auch der Betrag der Abweichung zwischen zwei aufeinander folgenden Zwischenmesswerten ermittelt werden. Dies reicht aus, wenn lediglich unakzeptable Abweichungen der Zwischenmesswerte, sogenannte Spikes, frühzeitig erkannt werden sollen.

Zur Bestimmung des Konzentrationswertes wird bevorzugt der Wert des Messsignals (Remissionswert), d.h. der Zwischenmesswert Rzᵢ, verwendet, der von dem vorausgehenden Zwischenmesswert Rzᵢ₋₁ weniger als ein vorbestimmter Grenzwert abweicht. Dieser Grenzwert ist auf einfache Weise parametrisierbar. Damit wird sichergestellt, dass der "richtige" Zwischenmesswert als aktueller Messwert des Messsignals für die Bestimmung des Konzentrationswertes verwendet wird. Dies ist dann der Fall, wenn die zeitliche Änderung des Messwertes (Remissionswert) vernachlässigbar ist.

Figur 3 stellt die Zuordnung zwischen den Werten des Messsignals R, also den Remissionsmesswerten, und den Konzentrationswerten C dar. Die Zuordnung kann in Form einer Tabelle oder einer Funktion bzw. einer Kurve abgelegt sein. Bevorzugt wird die Zuordnung des Auswertealgorithmus durch eine Spline-Funktion approximiert. Dabei hat sich eine Spline-Funktion mit höchstens zehn Stützstellen als geeignet erwiesen; bevorzugt wird eine Approximation durch eine Spline-Funktion mit höchstens fünf Stützstellen. Beispielsweise kann die Spline-Funktion durch eine Funktion dritten Grades gebildet sein. Die Parameter zur Beschreibung der Funktion dritten Grades sind jeweils von der Produktionscharge des verwendeten Testträgers 3 abhängig und werden jeweils vor der ersten Verwendung eines Testträgers einer neuen Produktionscharge dem Analysegerät eingespielt, wobei diese Informationen (Parameter) in den Speicher 17 des Analysegeräts 2 abgelegt werden. Bei einer Approximation der Zuordnung für eine Spline-Funktion dritten Grades an fünf Stützstellen müssen insgesamt 16 Parameter abgespeichert werden.

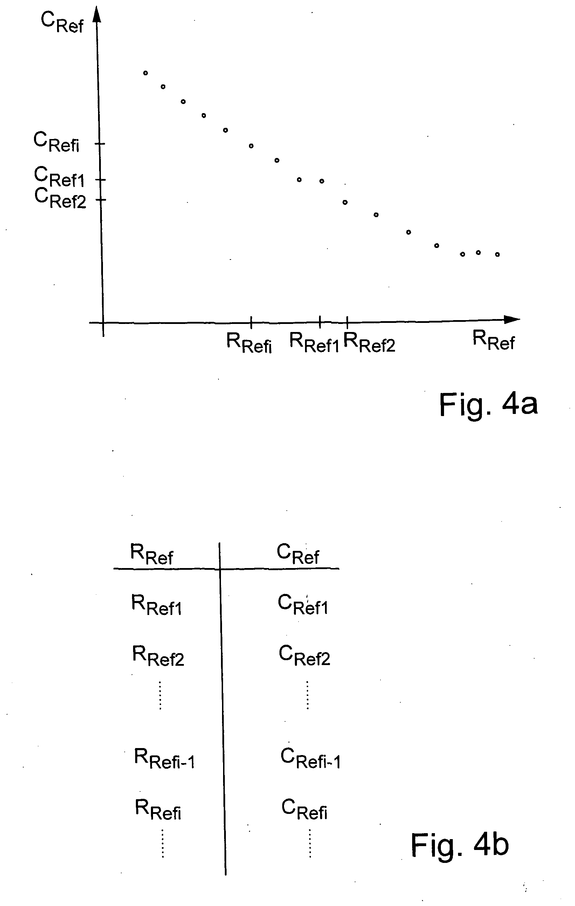

Vor der ersten Verwendung eines Testträgers 3 einer neuen Produktionscharge wird nach dem Einspielen der Information über die chargenspezifische Zuordnung eine Referenzzuordnung erstellt. Eine derartige Referenzzuordnung zwischen Referenzmesswert R_{Ref} (Referenzremissionswerten) und Referenzkonzentrationswerten C_{Ref} ist in Figur 4a dargestellt. Eine Mehrzahl von vorbestimmten Referenzmesswerten wird auf die Zuordnung des Auswertealgorithmus angewandt. Dadurch wird zu jedem Referenzmesswert R_{Refi} ein Referenzkonzentrationswert C_{Refi} erstellt. Vorzugsweise wird die Referenzzuordnung für wenigstens dreißig, besonders bevorzugt für wenigstens fünfzig Referenzmesswerte gebildet. Die Referenzzuordnung zwischen Referenzmesswerten R_{Ref} und Referenzkonzentrationswerten C_{Ref} kann auch, wie in Figur 4b gezeigt, in Form einer "Look-Up-Tabelle" abgelegt werden.

Um den ermittelten Konzentrationswert zu überprüfen, der aus dem aktuellen Messwert des Messsignals ermittelt wurde, wird der zu dem aktuellen Messwert passende Referenzmesswert (R_{Refi}) ermittelt. Zu diesem Referenzmesswert (R_{Refi}) wird mittels der Referenzzuordnung der Referenzkonzentrationswert C_{Refi} bestimmt. Der ausgewählte Referenzkonzentrationswert wird mit dem ermittelten Konzentrationswert verglichen. Erfindungsgemäß wird der Referenzmesswert (R_{Refi}) aus der Referenzzuordnung ausgewählt der dem aktuellen Messwert des Messsignals benachbart ist. Dabei kommt es nicht auf die unmittelbare Nachbarschaft an. Möglich ist auch, dass ein Referenzmesswert (R_{Refi}) ausgewählt wird, der eine vorbestimmte Anzahl von Referenzmesswerten von dem aktuellen Messwert des Messsignals entfernt ist. Beispielsweise können zwischen dem ausgewählten Referenzmesswert (R_{Refi}) und dem aktuellen Messwert des Messsignals drei oder fünf weitere Referenzmesswerte liegen, oder es wird der direkt benachbarte Referenzmesswert (R_{Refi}) ausgewählt, der zu dem aktuellen Messwert des Messsignals am nächstliegendsten ist (Seite 13). Optional wird ein erster und ein zweiter Referenzkonzentrationswert C_{Ref1},C_{Ref2} aus einem ersten und einem zweiten Referenzmesswert R_{Ref1},R_{Ref2} ermittelt. Als erster und der zweiter Referenzmesswert R_{Ref1},R_{Ref2} werden die Werte ausgewählt, die dem aktuellen Messwert des Messsignals jeweils benachbart oder eine vorbestimmte Anzahl von Referenzmesswerten von ihm entfernt sind. Die Bestimmung der beiden Referenzkonzentrationswerte C_{Ref1},C_{Ref2} geschieht mittels der Referenzzuordnung. Der ermittelte Konzentrationswert wird dann mittels des Kontrollalgorithmus mit dem ersten und dem zweiten Referenzkonzentrationswert C_{Ref1},C_{Ref2} überprüft. Bevorzugt muss der gemessene Konzentrationswert zwischen dem ersten und dem zweiten Referenzkonzentrationswert C_{Ref1},C_{Ref2} liegen.

Ein Fehler der Mess- und Auswerteeinrichtung 8 wird dann erkannt, wenn der ermittelte Konzentrationswert nicht zwischen dem ersten und dem zweiten Referenzkonzentrationswert C_{Ref1},C_{Ref2} liegt, wenn also der ermittelte Konzentrationswert größer als der erste Referenzkonzentrationswert C_{Ref1} und kleiner als der zweite Referenzkonzentrationswert C_{Ref2} ist.

Alternativ kann aus der Differenz des ersten und zweiten Referenzkonzentrationswerts C_{Ref1},C_{Ref2} auch der Grenzwert bestimmt werden, der zur Überprüfung der Abweichung des Konzentrationswertes von nur einem Referenzkonzentrationswert zugrundegelegt wird.

## Patentansprüche

1. Analysesystem zur photometrischen Bestimmung eines Analyten in einer Körperflüssigkeit, wobei das Analysesystem ein Analysegerät (2) und einen Testträger (3) umfasst, wobei der Testträger (3) eine Auswertezone (4) aufweist, in der als Folge einer Reaktion einer mit dem Testträger (3) kontaktierten Probe der Körperflüssigkeit mit einem in dem Testträger (3) enthaltenen Reagenz eine photometrisch nachweisbare Änderung stattfindet, und wobei das Analysegerät (2) umfasst:
einen optischen Sender (5) zur Emission von Licht auf die Auswertezone (4) des Testträgers (3);
einen optischen Empfänger (7) zum Empfang von Licht von der Auswertezone (4) und zum Erzeugen eines dem empfangenen Licht entsprechenden Messsignals;
eine Mess- und Auswerteeinrichtung (8) mit einer Messeinheit (9) und einer Auswerteeinheit (10),
wobei
die Messeinheit (9) geeignet und dazu eingerichtet ist, um das von dem Empfänger erzeugte Messsignal zu verstärken und zu digitalisieren,
die Auswerteeinheit (10) geeignet und dazu eingerichtet ist, aus dem digitalisierten Messsignal einen gesuchten Konzentrationswert mittels eines Auswertealgorithmus, der eine produktionsverfahrensspezifische vom verwendeten Testträger abhängige Zuordnung zwischen Werten des digitalisierten Messsignals und Konzentrationswerten umfasst, zu ermitteln, wobei in dem Auswertealgorithmus mindestens ein Rechenschritt mittels eines Prozessors ausgeführt wird,
die Auswerteeinheit (10) geeignet und dazu eingerichtet ist, um an einem Erfassungspunkt im Verfahrensablauf hinter der Ausführung des Rechenschrittes den Konzentrationswert zu erfassen,
der Konzentrationswert mittels eines Kontrollalgorithmus dadurch überprüft wird, dass eine Abweichung des ermittelten Konzentrationswerts von einem Referenzkonzentrationswert bestimmt wird,
**dadurch gekennzeichnet, dass** eine Referenzzuordnung in dem Kontrollalgorithmus verwendet wird, durch die einer Mehrzahl von Referenzmesswerten eine Mehrzahl von Referenzkonzentrationswerten zugeordnet wird, und wobei der Referenzkonzentrationswert mittels der Referenzzuordnung aus einem Referenzmesswert ermittelt wird, der dem aktuellen Messwert des Messsignals benachbart ist oder der von dem aktuellen Messwert des Messsignals eine bestimmte Anzahl von Referenzmesswerten entfernt ist, und
das Analysesystem geeignet und dazu eingerichtet ist, einen Fehler der Mess- und Auswerteeinrichtung (8) zu erkennen, wenn die Abweichung des Konzentrationswertes von dem Referenzkonzentrationswert einen vordefinierten Grenzwert übersteigt.

2. Analysesystem nach Anspruch 1, **dadurch gekennzeichnet, dass** das Analysegerät (2) einen Speicher (17) umfasst, in dem produktionsverfahrensspezifische Informationen des Testträgers (3) gespeichert sind und
in den Speicher (17) Informationen über die produktionsverfahrensspezifische Zuordnung eingespeist werden, bevor der Auswertealgorithmus für einen Testträger ausgeführt wird, und die Referenzzuordnung abgespeichert wird im Zusammenhang mit dem Einspeichern der Informationen über einen neuen produktionsverfahrensspezifischen Auswertealgorithmus und vor dessen erster Verwendung,

3. Analysesystem nach Anspruch 1 oder 2, **dadurch gekennzeichnet, dass** die produktionsverfahrensspezifische Zuordnung zwischen Werten des digitalisierten Messsignals und Konzentrationswerten produktionschargenspezifisch ist und dass in einen Speicher (17) Informationen über die produktionschargenspezifische Zuordnung eingespielt werden, bevor ein Auswertealgorithmus für einen Testträger (3) einer neuen Produktionscharge ausgeführt wird, und im Zusammenhang mit dem Einspielen der Informationen über einen neuen produktionschargenspezifischen Auswertealgorithmus und vor dessen erster Verwendung für einen Testträger (3) einer neuen Produktionscharge eine spezifische Referenzzuordnung abgespeichert wird.

4. Analysesystem nach einem der vorhergehenden Ansprüche, **dadurch gekennzeichnet, dass** mittels der Referenzzuordnung aus einem ersten und zweiten Referenzmesswert (R_{Ref1},R_{Ref2}), die dem aktuellen Messwert des Messsignals benachbart sind, oder die dem aktuellen Messwert des Messsignals eine vorbestimmte Anzahl von Referenzmesswerten entfernt sind, ein erster und zweiter Referenzkonzentrationswert (C_{Ref1},C_{Ref2}) ermittelt wird, und dass der Konzentrationswert mit dem ersten und dem zweiten Referenzkonzentrationswert (C_{Ref1},C_{Ref2}) mittels des Kontrollalgorithmus überprüft wird.

5. Analysesystem nach Anspruch 4, **dadurch gekennzeichnet, dass** ein Fehler der Mess- und Auswerteeinrichtung (8) erkannt wird, wenn der ermittelte Konzentrationswert nicht zwischen dem ersten Referenzkonzentrationswert (C_{Ref1}) und dem zweiten Referenzkonzentrationswert (C_{Ref2}) liegt.

6. Analysesystem nach einem der vorhergehenden Ansprüchen, **dadurch gekennzeichnet, dass** die Referenzzuordnung mittels des Auswertealgorithmus mit vorbestimmten Referenzmesswerten erzeugt wird.

7. Analysesystem nach einem der vorhergehenden Ansprüche, **dadurch gekennzeichnet, dass** die Referenzkonzentrationswerte der Referenzzuordnung des Kontrollalgorithmus auf mathematische Monotonie überprüft werden.

8. Analysesystem nach einem der vorhergehenden Ansprüche, **dadurch gekennzeichnet, dass** die Zuordnung des Auswertealgorithmus durch eine Spline-Funktion mit höchstens zehn Stützstellen, bevorzugt mit höchstens fünf Stützstellen approximiert wird.

9. Verfahren zur photometrischen Bestimmung eines Analyten in einer Körperflüssigkeit mittels eines Analysesystems mit einem Analysegerät (2) und einem Testträger (3), wobei
der Testträger (3) eine Auswertezone (4) aufweist, in der als Folge einer Reaktion einer mit dem Testträger (3) kontaktierten Probe der Körperflüssigkeit mit einer in dem Testträger (3) enthaltenen Reagenz eine photometrisch nachweisbare Änderung stattfindet, und
das Analysegerät (2) einen optischen Sender (5) zur Emission von Licht, einen optischen Empfänger (7) zum Empfang von Licht, eine Mess- und Auswerteeinrichtung (8) mit einer Messeinheit (9) und einer Auswerteeinheit (10) umfasst,
insbesondere mittels eines Analysesystems nach Anspruch 1,
mit den folgenden Schritten:
a) Emittieren von Licht aus dem Sender (5) auf die Auswertezone (4) des Testträgers (3);
b) Empfangen von Licht von der Auswertezone (4):
c) Erzeugen eines dem empfangenen Licht entsprechenden Messsignals;
d) Verstärken und Digitalisieren des von dem Empfänger (7) erzeugten Messsignals in der Messeinheit (9);
e) Ermitteln des gesuchten Konzentrationswertes aus dem digitalisierten Messsignal in der Auswerteeinheit (10) mittels eines Auswertealgorithmus, der eine produktionsverfahrensspezifische vom verwendeten Testträger abhängige Zuordnung zwischen Werten des digitalisierten Messsignals und Konzentrationswerten umfasst, wobei in dem Auswertealgorithmus mindestens ein Rechenschritt mittels eines Prozessors ausgeführt wird,
f) Erfassen des Konzentrationswertes in der Auswerteeinheit (10) an einem Erfassungspunkt im Verarbeitungsablauf hinter der Ausführung des Rechenschrittes;
g) Überprüfen des Konzentrationswertes mittels eines Kontrollalgorithmus **gekennzeichnet durch** die weiteren Schritte:
g1) Zuordnen einer Mehrzahl von Referenzmesswerten zu einer Mehrzahl von Referenzkonzentrationswerten in einer Referenzzuordnung;
g2) Ermitteln des Referenzkonzentrationswertes mittels der Referenzzuordnung aus einem Referenzmesswert, der dem aktuellen Messwert des Messsignals benachbart ist oder der von dem aktuellen Messwert des Messsignals eine bestimmte Anzahl von Referenzmesswerten entfernt ist;
g3) Verwenden der Referenzzuordnung in dem Kontrollalgorithmus;
g4) Bestimmen einer Abweichung des ermittelten Konzentrationswertes von dem Referenzkonzentrationswert mittels der Referenzzuordnung;
h) Erkennen eines Fehlers der Mess- und Auswerteeinrichtung (8), wenn die Abweichung des Konzentrationswertes von dem Referenzkonzentrationswert einen vordefinierten Grenzwert übersteigt.

10. Verfahren nach Anspruch 9, bei dem das Analysegerät (2) einen Speicher (17) umfasst, in dem produktionsverfahrensspezifische Informationen des Testträgers (3) gespeichert sind;
**gekennzeichnet durch** die weiteren Schritte:
i) Einspielen von Informationen über die produktionsverfahrensspezifische Zuordnung bevor der Auswertealgorithmus für einen Testträger ausgeführt wird,
j) Abspeichern der Referenzzuordnung in dem Speicher (17) im Zusammenhang mit dem Einspielen der Informationen über den produktionsverfahrensspezifischen Auswertealgorithmus und vor dessen erster Verwendung.

11. Verfahren nach Anspruch 9 oder 10, **dadurch gekennzeichnet, dass** die produktionsverfahrensspezifische Zuordnung zwischen den Werten des digitalisierten Messsignals und den Konzentrationswerten zur Ermittlung des gesuchten Konzentrationswertes aus dem digitalisierten Messsignal produktionschargenspezifisch ist.

12. Verfahren nach einem der Ansprüche 10 bis 11, **gekennzeichnet durch** folgende Schritte:
a) Ermitteln eines ersten und zweiten Referenzkonzentrationswertes (C_{Ref1}, C_{Ref2}) mittels der Referenzzuordnung aus einem ersten und zweiten Referenzmesswert (R_{Ref1}, R_{Ref2}), die dem aktuellen Messwert des Messsignals benachbart oder die zu dem aktuellen Messwert eine vorbestimmte Anzahl von Referenzmesswerten (R_{Ref1}) entfernt sind,
b) Überprüfen des Konzentrationswertes mittels des Kontrollalgorithmus mit dem ersten und zweiten Referenzkonzentrationswert (C_{Ref1}, C_{Ref2}).

13. Verfahren nach Anspruch 12, **gekennzeichnet durch** den folgenden Schritt:
Erkennen eines Fehlers der Mess- und Auswerteeinrichtung (8), wenn der ermittelte Konzentrationswert nicht zwischen dem ersten Referenzkonzentrationswert (C_{Ref1}) und dem zweiten Referenzkonzentrationswert (C_{Ref2}) liegt.

## Claims

1. Analysis system for the photometric determination of an analyte in a body fluid, the analysis system comprising an analysis instrument (2) and a test carrier (3), the test carrier (3) comprising an evaluation zone (4) in which a photometrically detectable change occurs as a result of a reaction of a sample of the body fluid contacted to the test carrier (3) with a reagent contained in the test carrier (3), the analysis instrument (2) comprising:
an optical emitter (5) for emitting light onto the evaluation zone (4) of the test carrier (3);
an optical receiver (7) for receiving light from the evaluation zone (4) and for generating a measurement signal corresponding to the received light;
a measuring and evaluation device (8) having a measuring unit (9) and an evaluation unit (10),
wherein
the measuring unit (9) is capable and adapted for amplifying and digitizing the measurement signal generated by the receiver,
the evaluation unit (10) is capable and adapted for determining a desired concentration value from the digitized measurement signal using an evaluation algorithm, which comprises an assignment of concentration values to the values of the digitized measurement signal, the assignment being production-method-specific and dependent on the test carrier used, wherein in the evaluation algorithm at least one computing step is executed by means of a processor,
the evaluation unit (10) is capable and adapted for acquiring in the algorithmic sequence of steps the concentration value at an acquisition point downstream from the execution of the computing step,
the concentration value is verified by means of a control algorithm by determining a deviation of the determined concentration value from a reference concentration value, **characterized in that**
a reference assignment in the control algorithm is used, the reference assignment assigning a plurality of reference concentration values to a plurality of reference measurement values, and wherein, using the reference assignment, the reference concentration value is determined from a reference measurement value which is adjacent to the current measurement value of the measurement signal or which is a specific number of reference measurement values away from the current measurement value of the measurement signal, and
the analysis system is capable and adapted for recognizing an error of the measuring and evaluation device (8) if the deviation of the concentration value from the reference concentration value exceeds a predefined limiting value.

2. Analysis system according to claim 1, **characterized in that** the analysis instrument (2) comprises a memory (17) in which information specific to the production method of the test carrier (3) is stored and
information about the production-method-specific assignment is inputted into the memory (17) before the evaluation algorithm is executed for a test carrier, and the reference assignment is stored in connection with the storing of information about a new production-method-specific evaluation algorithm and before the first use thereof.

3. Analysis system according to claim 1 or 2, **characterized in that** the production-method-specific assignment between values of the digitized measurement signal and concentration values is specific to the production batch, and **in that** information about the production-batch-specific assignment is inputted into a memory (17) before an evaluation algorithm is executed for a test carrier (3) of a new production batch, and **in that** in connection with the input of the information about a new production-batch-specific evaluation algorithm and before the first use thereof for a test carrier (3) of a new production batch a specific reference assignment is stored.

4. Analysis system according to any one of the preceding claims, **characterized in that**,
using the reference assignment, a first and second reference concentration value (C_{Ref1}, C_{Ref2}) are determined from a first and second reference measurement value (R_{Ref1}, R_{Ref2}), which are adjacent to, or are a predetermined number of reference measurement values away from, the current measurement value of the measurement signal, and **in that**
the concentration value is verified using the first and the second reference concentration value (C_{Ref1}, CR_{ef2}) by means of the control algorithm.

5. Analysis system according to claim 4, **characterized in that** an error of the measuring and evaluation device (8) is recognized if the determined concentration value is not between the first reference concentration value (C_{Ref1}) and the second reference concentration value (C_{Ref2}).

6. Analysis system according to any one of the preceding claims, **characterized in that** the reference assignment is generated by means of the evaluation algorithm using predetermined reference measurement values.

7. Analysis system according to any one of the preceding claims, **characterized in that** the reference concentration values of the reference assignment of the control algorithm are examined for mathematical monotony.

8. Analysis system according to any one of the preceding claims, **characterized in that** the assignment of the evaluation algorithm is approximated by a spline function having at most 10 support points, preferably having at most five support points.

9. Method for the photometric determination of an analyte in a body fluid using an analysis system comprising an analysis instrument (2) and a test carrier (3),
the test carrier (3) having an evaluation zone (4), in which a photometrically detectable change occurs as a result of a reaction of a sample of the body fluid contacted with the test carrier (3) with a reagent contained in the test carrier (3), and
the analysis instrument (2) comprising an optical emitter (5) for emitting light, an optical receiver (7) for receiving light, a measuring and evaluation device (8) having a measuring unit (9) and an evaluation unit (10),
in particular using an analysis system according to claim 1,
comprising the following steps:
a) emitting light from the emitter (5) onto the evaluation zone (4) of the test carrier (3);
b) receiving light from the evaluation zone (4):
c) generating a measurement signal corresponding to the received light;
d) amplifying and digitizing in the measuring unit (9) the measurement signal generated by the receiver (7);
e) determining in the analysis unit (10) the desired concentration value from the digitized measurement signal using an evaluation algorithm which comprises an assignment between values of the digitized measurement signal and concentration values, the assignment being specific to the production method and dependent on the test carrier used, at least one computing step being executed by a processor in the evaluation algorithm,
f) acquiring the concentration value in the evaluation unit (10) at an acquisition point in the algorithmic sequence of steps downstream from the execution of the computing step;
g) verifying the concentration value using a control algorithm, **characterized by** the following steps:
g1) assigning a plurality of reference measurement values to a plurality of reference concentration values using a reference assignment;
g2) determining the reference concentration value using the reference assignment from a reference measurement value which is adjacent to, or is a specific number of reference measurement values away from, the current measurement value of the measurement signal;
g3) using the reference assignment in the control algorithm;
g4) determining a deviation of the determined concentration value from the reference concentration value using the reference assignment;
h) recognizing an error of the measuring and evaluation device (8) if the deviation of the concentration value from the reference concentration value exceeds a predefined limiting value.

10. Method according to claim 9, in which the analysis instrument (2) comprises a memory (17) in which information of the test carrier (3) is stored, the information being specific to the production method;
**characterized by** the further steps:
i) inputting information about the production-method-specific assignment before the evaluation algorithm for a test carrier is executed,
j) storing the reference assignment in the memory (17) in connection with the input of the information about the production-method-specific evaluation algorithm and before the first use thereof.

11. Method according to claim 9 or 10, **characterized in that** the production-method-specific assignment between the values of the digitized measurement signal and the concentration values for determining the desired concentration value from the digitized measurement signal is specific to the production batch.

12. Method according to any one of claims 10 to 11, **characterized by** the following steps:
a) determining a first and second reference concentration value (C_{Ref1}, C_{Ref2}) using the reference assignment from a first and second reference measurement value (R_{Ref1}, R_{Ref2}), which are adjacent to, or are a predetermined number of reference measurement values (R_{Ref1}) away from, the current measurement value of the measurement signal,
b) verifying the concentration value by means of the control algorithm using the first and second reference concentration values (C_{Ref1}, C_{Ref2}).

13. Method according to claim 12, **characterized by** the following step:
recognizing an error of the measuring and evaluation device (8) if the determined concentration value is not between the first reference concentration value (C_{Ref1}) and the second reference concentration value (C_{Ref2}).

## Revendications

1. Système d'analyse destiné à la détermination photométrique d'un analyte dans un fluide corporel, ledit système d'analyse comprenant un appareil d'analyse (2) et un support de test (3), le support de test (3) comportant une zone d'évaluation (4) dans laquelle a lieu un changement pouvant être mis en évidence photométriquement, suite à une réaction d'un échantillon du fluide corporel mis en contact avec le support de test (3) avec un réactif contenu dans le support de test (3), et l'appareil d'analyse (2) comprenant :
un émetteur optique (5) destiné à émettre de la lumière sur la zone d'évaluation (4) du support de test (3) ;
un récepteur optique (7) destiné à recevoir de la lumière de la zone d'évaluation (4) et à générer un signal de mesure correspondant à la lumière reçue ;
un dispositif de mesure et d'évaluation (8) comprenant une unité de mesure (9) et une unité d'évaluation (10),
l'unité de mesure (9) étant apte et conçue pour amplifier et numériser le signal de mesure reçu par le récepteur,
l'unité d'évaluation (10) étant apte et conçue pour déterminer à partir du signal de mesure numérisé une valeur de concentration recherchée, au moyen d'un algorithme d'évaluation qui comprend une association spécifique au procédé de production, dépendante du support de test utilisé, entre des valeurs du signal de mesure numérisé et des valeurs de concentration, dans ledit algorithme d'évaluation étant exécutée au moins une étape de calcul au moyen d'un processeur,
l'unité d'évaluation (10) étant apte et conçue pour détecter la valeur de concentration en un point de détection au cours du procédé en aval de l'exécution de l'étape de calcul,
la valeur de concentration étant vérifiée au moyen d'un algorithme de contrôle, en déterminant un écart entre la valeur de concentration déterminée et une valeur de concentration de référence,
**caractérisé en ce qu'**une association de référence est utilisée dans l'algorithme de contrôle, permettant d'associer à une pluralité de valeurs de mesure de référence une pluralité de valeurs de concentration de référence, et la valeur de concentration de référence est déterminée, au moyen de l'association de référence, à partir d'une valeur de mesure de référence qui est voisine de la valeur de mesure actuelle du signal de mesure ou qui est éloignée de la valeur de mesure actuelle du signal de mesure d'un certain nombre de valeurs de mesure de référence, et
le système d'analyse est apte et conçu pour détecter une erreur du dispositif de mesure et d'évaluation (8) lorsque l'écart entre la valeur de concentration et la valeur de concentration de référence dépasse une valeur seuil prédéfinie.

2. Système d'analyse selon la revendication 1, **caractérisé en ce que** l'appareil d'analyse (2) comprend une mémoire (17) dans laquelle des informations spécifiques au procédé de production du support de test (3) sont enregistrées et des informations sur l'association spécifique au procédé de production sont introduites dans ladite mémoire (17) avant que l'algorithme d'évaluation pour un support de test ne soit exécuté, et l'association de référence est enregistrée en relation avec la mise en mémoire des informations sur un nouvel algorithme d'évaluation spécifique au procédé de production et avant la première utilisation de celui-ci.

3. Système d'analyse selon la revendication 1 ou 2, **caractérisé en ce que** l'association spécifique au procédé de production entre des valeurs du signal de mesure numérisé et des valeurs de concentration est spécifique au lot de production et **en ce que** des informations sur l'association spécifique au lot de production sont introduites dans une mémoire (17) avant qu'un algorithme d'évaluation pour un support de test (3) d'un nouveau lot de production ne soit exécuté, et en relation avec l'introduction des informations sur un nouvel algorithme d'évaluation spécifique au lot de production et avant la première utilisation de celui-ci pour un support de test (3) d'un nouveau lot de production, une association de référence spécifique est enregistrée.

4. Système d'analyse selon l'une des revendications précédentes, **caractérisé en ce que**, au moyen de l'association de référence, une première et une seconde valeur de concentration de référence (C_{Ref1}, C_{Ref2}) sont déterminées à partir d'une première et d'une seconde valeur de mesure de référence (R_{Ref1},R_{Ref2}) qui sont voisines de la valeur de mesure actuelle du signal de mesure ou qui sont éloignées de la valeur de mesure actuelle du signal de mesure d'un nombre prédéterminé de valeurs de mesure de référence, et **en ce que** la valeur de concentration est vérifiée avec la première et la seconde valeur de concentration de référence (C_{Ref1}, C_{Ref2}) au moyen de l'algorithme de contrôle.

5. Système d'analyse selon la revendication 4, **caractérisé en ce qu'**une erreur du dispositif de mesure et d'évaluation (8) est détectée lorsque la valeur de concentration déterminée n'est pas située entre la première valeur de concentration de référence (C_{Ref1}) et la seconde valeur de concentration de référence (C_{Ref2}).

6. Système d'analyse selon l'une des revendications précédentes, **caractérisé en ce que** l'association de référence est créée au moyen de l'algorithme d'évaluation à l'aide de valeurs de mesure de référence prédéterminées.

7. Système d'analyse selon l'une des revendications précédentes, **caractérisé en ce que** les valeurs de concentration de référence de l'association de référence de l'algorithme de contrôle sont vérifiées en termes de monotonie mathématique.

8. Système d'analyse selon l'une des revendications précédentes, **caractérisé en ce que** l'association de l'algorithme d'évaluation fait l'objet d'une approximation par une fonction spline avec un maximum de dix point nodaux, de préférence avec un maximum de cinq point nodaux.

9. Procédé de détermination photométrique d'un analyte dans un fluide corporel au moyen d'un système d'analyse comprenant un appareil d'analyse (2) et un support de test (3),
le support de test (3) comportant une zone d'évaluation (4) dans laquelle a lieu un changement pouvant être mis en évidence photométriquement, suite à une réaction d'un échantillon du fluide corporel mis en contact avec le support de test (3) avec un réactif contenu dans le support de test (3), et l'appareil d'analyse (2) comprenant un émetteur optique (5) destiné à émettre de la lumière, un récepteur optique (7) destiné à recevoir de la lumière, un dispositif de mesure et d'évaluation (8) comprenant une unité de mesure (9) et une unité d'évaluation (10),
en particulier au moyen d'un système d'analyse selon la revendication 1, comprenant les étapes suivantes :
a) émission de la lumière depuis l'émetteur (5) sur la zone d'évaluation (4) du support de test (3) ;
b) réception de la lumière par la zone d'évaluation (4) ;
c) génération d'un signal de mesure correspondant à la lumière reçue ;
d) amplification et numérisation du signal de mesure reçu par le récepteur (7) dans l'unité de mesure (9) ;
e) détermination de la valeur de concentration recherchée à partir du signal de mesure numérisé dans l'unité d'évaluation (10) au moyen d'un algorithme d'évaluation qui comprend une association spécifique au procédé de production, dépendante du support de test utilisé, entre des valeurs du signal de mesure numérisé et des valeurs de concentration, dans ledit algorithme d'évaluation étant exécutée au moins une étape de calcul au moyen d'un processeur ;
f) détection de la valeur de concentration dans l'unité d'évaluation (10) en un point de détection au cours du traitement en aval de l'exécution de l'étape de calcul ;
g) vérification de la valeur de concentration au moyen d'un algorithme de contrôle, **caractérisé par** les étapes supplémentaires :
g1) association d'une pluralité de valeurs de mesure de référence à une pluralité de valeurs de concentration de référence dans une association de référence ;
g2) détermination de la valeur de concentration de référence, au moyen de l'association de référence, à partir d'une valeur de mesure de référence qui est voisine de la valeur de mesure actuelle du signal de mesure ou qui est éloignée de la valeur de mesure actuelle du signal de mesure d'un certain nombre de valeurs de mesure de référence ;
g3) utilisation de l'association de référence dans l'algorithme de contrôle ;
g4) détermination d'un écart entre la valeur de concentration déterminée et la valeur de concentration de référence au moyen de l'association de référence ;
h) détection d'une erreur du dispositif de mesure et d'évaluation (8) lorsque l'écart entre la valeur de concentration et la valeur de concentration de référence dépasse une valeur seuil prédéfinie.

10. Procédé selon la revendication 9, l'appareil d'analyse (2) comprenant une mémoire (17) dans laquelle des informations spécifiques au procédé de production du support de test (3) sont enregistrées ;
**caractérisé par** les étapes supplémentaires :
i) introduction d'informations sur l'association spécifique au procédé de production avant que l'algorithme d'évaluation pour un support de test ne soit exécuté,
j) enregistrement de l'association de référence dans la mémoire (17), en relation avec la mise en mémoire des informations sur l'algorithme d'évaluation spécifique au procédé de production et avant la première utilisation de celui-ci.

11. Procédé selon la revendication 9 ou 10, **caractérisé en ce que** l'association spécifique au procédé de production entre les valeurs du signal de mesure numérisé et les valeurs de concentration pour déterminer la valeur de concentration recherchée à partir du signal de mesure numérisé est spécifique au lot de production.

12. Procédé selon l'une des revendications 10 à 11, **caractérisé par** les étapes suivantes :
a) détermination d'une première et d'une seconde valeur de concentration de référence (C_{Ref1}, C_{Ref2}) au moyen de l'association de référence, à partir d'une première et d'une seconde valeur de mesure de référence (R_{Ref1},R_{Ref2}) qui sont voisines de la valeur de mesure actuelle du signal de mesure ou qui sont éloignées de la valeur de mesure actuelle du signal de mesure d'un nombre prédéterminé de valeurs de mesure de référence (R_{Ref1}),
b) vérification de la valeur de concentration au moyen de l'algorithme de contrôle avec la première et la seconde valeur de concentration de référence (C_{Ref1}, C_{Ref2}).

13. Procédé selon la revendication 12, **caractérisé par** l'étape suivante :
détection d'une erreur du dispositif de mesure et d'évaluation (8) lorsque la valeur de concentration déterminée n'est pas située entre la première valeur de concentration de référence (C_{Ref1}) et la seconde valeur de concentration de référence (C_{Ref2}).
